# EUROPEAN PATENT APPLICATION

(11) **EP 1 972 694 A2**
(43) Date of publication of application: **24.09.2008**
(21) Application number: 08005535.3
(22) Date of filing: 25.03.2008
(51) Int. Cl.: C21D 9/30, C21D 1/09

(54) **Crankshaft, internal combustion engine, transportation apparatus, and production method for crankshaft**

(30) Priority: 23.03.2007 JP 2007077721
(71) Applicant: Yamaha Hatsudoki Kabushiki Kaisha, Iwata-shi, Shizuoka 438-8501 (JP)
(72) Inventor: Iwasaki, Shinya, Shizuoka-ken 438-8501 (JP); Yamagata, Hiroshi, Shizuoka-ken 438-8501 (JP); Kurita, Hirotaka, Shizuoka-ken 438-8501 (JP)
(74) Representative: Grünecker, Kinkeldey, Stockmair & Schwanhäusser Anwaltssozietät

(57) **Abstract**

A crankshaft having a crankpin, a crank journal, and a crank arm for linking the crankpin and the crank journal, includes a pin fillet portion located between the crankpin and the crank arm; and a journal fillet portion located between the crank journal and the crank arm. At least one of the crankpin and the crank journal has a diameter of no less than about 20 mm and no more than about 40 mm. At least one of the pin fillet portion and the journal fillet portion contains a quench-hardened layer having a thickness of no less than about 1 mm and no more than about 2 mm in the vicinity of a surface thereof. The crankpin and the crank journal substantially do not contain any quench-hardened layer having a thickness exceeding about 2mm in the vicinity of a surface thereof.

## Description

### BACKGROUND OF THE INVENTION

### 1. Field of the Invention:

The present invention relates to a crankshaft and a production method thereof, and more particularly to a crankshaft which has been subjected to a quench-hardening (hereinafter simply referred to as "hardening") treatment using a laser, and a production method thereof. Moreover, the present invention relates to an internal combustion engine and a transportation apparatus having such a crankshaft.

### 2. Description of the Related Art:

Conventionally, hardening via radio-frequency heating (radio-frequency hardening) is performed for improving the strength of a crankshaft. However, radio-frequency hardening has a disadvantage in that, depending on the shape of the site on which hardening is performed, it may become difficult to attain deep hardening, such that a sufficient thickness of the hardened layer may not be formed. This results in the following problems.

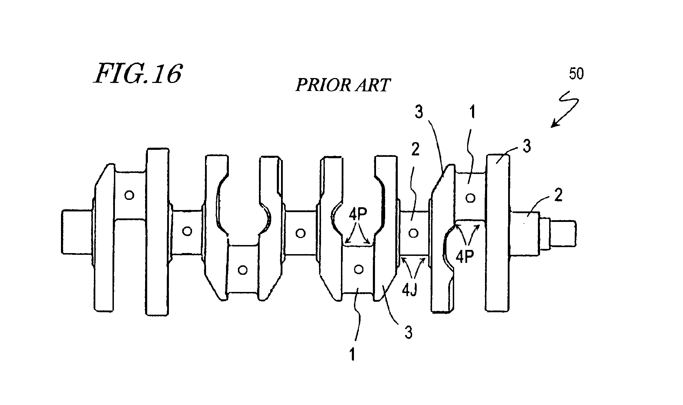

FIG. 16 shows a conventional generic crankshaft 50. As shown in FIG. 16, the crankshaft 50 includes crankpins 1 and crank journals 2, as well as crank arms 3 each linking a crankpin 1 and a crank journal 2.

During operation of the internal combustion engine, stress will concentrate at fillet portions (pin fillet portions) 4P each located between a crankpin 1 and a crank arm 3. Therefore, it is preferable to perform hardening for the pin fillet portions 4P in order to form a sufficient thickness of the hardened layer. Moreover, by performing hardening for the pin fillet portions 4P as well as fillet portions (journal fillet portions) 4J each located between a crank journal 2 and a crank arm 3, it becomes possible to ensure a sufficient strength even with thin crankpins 1 and thin crank journals 2. This makes it possible to reduce the weight of the crankshaft 50.

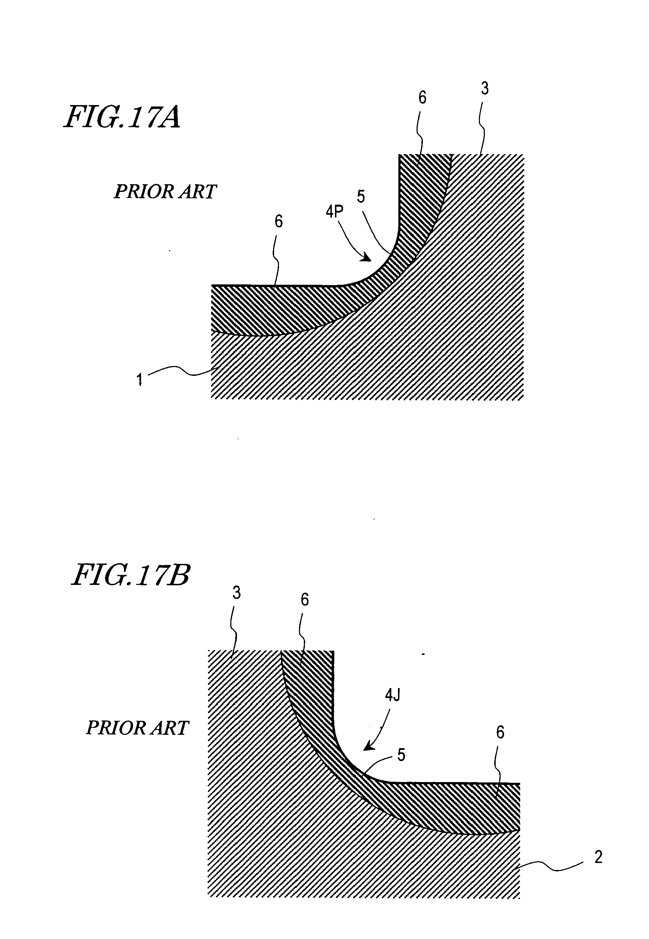

However, in radio-frequency heating, where an object to be heated is covered with a coil for heating, it is difficult to attain deep hardening at any fillet portion (inner corner) that is concavely curved, such as the pin fillet portions 4P and the journal fillet portions 4J. Therefore, as shown in FIGS. 17A and 17B, excessively deep hardening into the crankpins 1, the crank journals 2, and the crank arms 3 may result from attempting to form a sufficient thickness of a hardened layer 5 at the pin fillet portions 4P and the journal fillet portions 4J. As a result, an excessively thick hardened layer 6 may be formed.

Because of the aforementioned problems, radio-frequency hardening is mainly used for crankshafts of large-sized internal combustion engines (e.g., internal combustion engines of four-wheeled automobiles). Since a crankshaft for a large-sized internal combustion engine is large in size and has thick crankpins and crank journals, even if a somewhat thick hardened layer is formed on the crankpins and the crank journals, little deformation will occur, and such deformation is tolerated.

On the other hand, when radio-frequency hardening is used for a crankshaft of a small-sized internal combustion engine (e.g., an internal combustion engine for a motorcycle), the crankshaft is small in size and has thin crankpins and thin crank journals (with diameters of 40 mm or less in many cases). Therefore, if an excessively thick hardened layer is formed on the crankpins or the crank journals, the crankshaft may be distorted or cracked.

For the above reason, a crankshaft of a relatively small size is often subjected to a nitriding treatment, instead of radio-frequency hardening. By employing a nitriding treatment to form a nitride film on the surface of the pin fillet portions and journal fillet portions, the strength of a crankshaft can be enhanced without allowing strain or cracking to occur. However, a nitriding treatment can only harden a very superficial layer of the pin fillet portions and journal fillet portions, with which it is difficult to obtain a sufficiently enhanced strength.

Therefore, the inventors have studied subjecting a crankshaft to a laser-based hardening treatment, which allows for easy adjustment of the hardening depth. For example, Japanese Laid-Open Patent Publication No. 2003-231914 (hereinafter "Patent Document 1") discloses a technique of performing a hardening treatment by irradiating a columnar workpiece having a diameter of 10 mm with laser light.

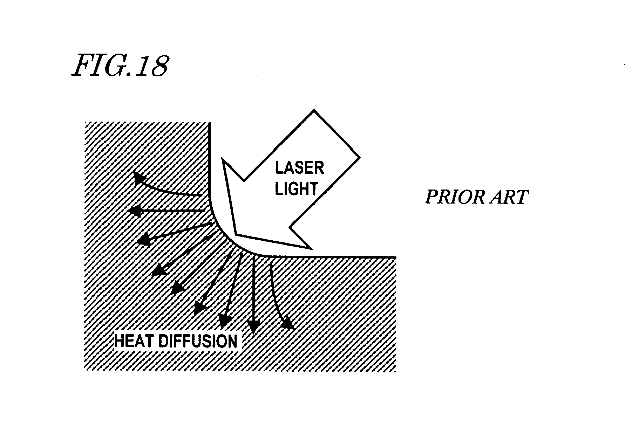

However, merely applying laser hardening as disclosed in Patent Document 1 to a crankshaft still does not make it easy to form a sufficient thickness of the hardened layer. The reason is that the laser light will strike only the surface of an object and commence heating from the surface, thus making it difficult to form a deep hardened layer. In particular, at inner corners such as the pin fillet portions or journal fillet portions, there is strong diffusion of heat into the surroundings (i.e., portions which do not need hardening), as schematically shown in FIG. 18. Thus, the inner corners are difficult to be heated even with laser light, thus hindering deep hardening. Another reason is that a crankshaft is larger in size than the workpiece which is disclosed in Patent Document 1 (note that crankpins and crank journals typically have a diameter of 20 mm or more), and thus has a large thermal capacity. Thus, with the heat diffusion, it is difficult to attain a temperature above the transformation temperature down to a sufficient depth. Furthermore, the laser to be employed has an output distribution characterized by a high output in the center and lower outputs at the ends, which also makes it difficult to perform uniform heating down to a sufficient depth.

### SUMMARY OF THE INVENTION

In order to overcome the problems described above, preferred embodiments of the present invention provide a crankshaft which has a sufficiently high strength and which allows for little deformation due to hardening, and a production method thereof.

A crankshaft according to a preferred embodiment of the present invention having a crankpin, a crank journal, and a crank arm for linking the crankpin and the crank journal, preferably includes a pin fillet portion located between the crankpin and the crank arm; and a journal fillet portion located between the crank journal and the crank arm, wherein, at least one of the crankpin and the crank journal preferably has a diameter of no less than about 20 mm and no more than about 40 mm; at least one of the pin fillet portion and the journal fillet portion contains a quench-hardened layer preferably having a thickness of no less than about 1 mm and no more than about 2 mm in a surface vicinity thereof; and the crankpin and the crank journal substantially do not contain any quench-hardened layer having a thickness exceeding about 2mm in a surface vicinity thereof.

In a preferred embodiment, at least the pin fillet portion contains the quench-hardened layer having a thickness of no less than about 1 mm and no more than about 2 mm.

In a preferred embodiment, both of the pin fillet portion and the journal fillet portion contain the quench-hardened layer having a thickness of no less than about 1 mm and no more than about 2 mm.

In a preferred embodiment, the crankshaft is preferably composed of an iron-based alloy having a carbon equivalent Ceq of no less than about 0.5 and no more than about 1.2, wherein the carbon equivalent Ceq is expressed as Ceq=C+(1/10)Si+(1/5)Mn+(5/22)Cr+1.65V-(5/7)S.

An internal combustion engine according to a preferred embodiment of the present invention includes a crankshaft having the above construction.

A transportation apparatus according to a preferred embodiment of the present invention includes an internal combustion engine having the above construction.

A method for producing a crankshaft preferably includes a step of providing a laser capable of emitting laser light having an energy density that is substantially uniform along a direction which is substantially orthogonal to the scanning direction; and a laser hardening step of hardening a crankshaft by using laser light which is emitted from the laser, wherein, the laser hardening step includes a main heating step of irradiating a surface of the crankshaft with laser light so that the surface of the crankshaft has a temperature which is higher than a transformation temperature of the crankshaft and which is lower than a melting point of the crankshaft; a pre-heating step of, before the main heating step, irradiating the surface of the crankshaft with laser light having an energy density which is lower than that of the laser light being radiated in the main heating step; and a post-heating step of, after the main heating step, irradiating the surface of the crankshaft with laser light having an energy density which is lower than that of the laser light being irradiated in the main heating step, so that the surface of the crankshaft is maintained at a temperature which is higher than the transformation temperature.

In a preferred embodiment, in the laser hardening step, at least one of a pin fillet portion and a journal fillet portion of the crankshaft is irradiated with laser light.

In a preferred embodiment, the laser includes a plurality of laser light sources arranged so as to produce a plurality of laser spots having a partial overlapping portion at the surface of the crankshaft.

In a crankshaft according to a preferred embodiment of the present invention, at least one of the pin fillet portion and the journal fillet portion contains a quench-hardened layer having a thickness of no less than about 1 mm and no more than about 2 mm in a surface vicinity thereof, and the crankpin and the crank journal substantially do not contain any quench-hardened layer having a thickness exceeding about 2 mm in a surface vicinity thereof. Since quench-hardened layers with the aforementioned thickness distribution are prescribed, it is possible to obtain a sufficient strength while minimizing deformation due to hardening, even in the case where the crankpin and/or the crank journal have a diameter of no less than about 20 mm and no more than about 40 mm.

During operation of the internal combustion engine, stress concentrates at the pin fillet portion. Therefore, it is preferable that at least the pin fillet portion contains the quench-hardened layer having a thickness of no less than about 1 mm and no more than about 2 mm.

Moreover, in order to ensure weight reduction by utilizing a thinner crankpin and crank journal, it is preferable that both the pin fillet portion and the journal fillet portion contain the hardened layer having a thickness of no less than about 1 mm and no more than about 2 mm.

From the standpoint of ensuring high processibility while ensuring good hardening ability, it is preferable that the crankshaft is composed of an iron-based alloy having a carbon equivalent Ceq of no less than about 0.5 and no more than about 1.2, wherein the carbon equivalent Ceq is expressed as Ceq=C+(1/10)Si+(1/5)Mn+(5/22)Cr+1.65V-(5/7)S.

A crankshaft according to a preferred embodiment of the present invention has a sufficiently high strength and allows for little deformation due to hardening, and therefore is suitably used for the internal combustion engines of various transportation apparatuses, e.g., motorcycles.

A method for producing a crankshaft according to a preferred embodiment of the present invention involves a laser hardening step which preferably includes three heating steps of a pre-heating step, a main heating step, and a post-heating step. By performing the pre-heating step before the main heating step, a temperature above the transformation temperature can be quickly reached, down to a sufficient depth. Moreover, by performing the post-heating step after the main heating step, the effective hardening time (i.e., a period during which a temperature which is higher than the transformation temperature is maintained) can be prolonged, without allowing the surface to melt. Therefore, according to the production method of the various preferred embodiments of the present invention, a sufficient thickness of the hardened layer can be formed in the surface vicinity of the crankshaft at desired sites (e.g., on a pin fillet portion and a journal fillet portion). Moreover, since the method for producing a crankshaft according to the various preferred embodiments of the present invention employs a laser that is capable of emitting laser light whose energy density is substantially uniform along a direction which is substantially orthogonal to the scanning direction, uniform heating can be performed down to a sufficient depth.

Typically, in a laser hardening step, at least one of the pin fillet portion and journal fillet portion of the crankshaft is irradiated with laser light: Since stress concentrates at the pin fillet portion during operation of the internal combustion engine, from the standpoint of improving the crankshaft strength, it is preferable that at least the pin fillet portion is irradiated with laser light. Moreover, from the standpoint of ensuring weight reduction by providing a thinner crankpin and the crank journal, it is preferable that both the pin fillet portion and the journal fillet portion are irradiated with laser light.

Moreover, it is preferable that the laser includes a plurality of laser light sources arranged so as to produce a plurality of laser spots having a partial overlap at the surface of the crankshaft. By using such a laser, it becomes possible to execute a laser hardening step which includes a pre-heating step, a main heating step, and a post-heating step, in a simple manner.

According to the various preferred embodiments of the present invention, there is provided a crankshaft which has a sufficiently high strength and which allows for little deformation due to hardening, and a production method thereof.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 is a diagram schematically showing a crankshaft 10 according to a preferred embodiment of the present invention.

FIGS. 2A and 2B are enlarged cross-sectional views each showing a portion of the crankshaft 10 according to a preferred embodiment of the present invention. FIG. 2A shows the vicinity of a pin fillet portion; and FIG. 2B shows the vicinity of a journal fillet portion.

FIG. 3 is a diagram showing an example of a laser (laser apparatus) which is used for laser hardening.

FIG. 4 is a graph conceptually showing a general relationship, between temperature and time, of a metallographical structure which is subjected to laser hardening.

FIG. 5 is a graph showing change over time in the energy density of laser light that is radiated onto the surface of the crankshaft 10 in a laser hardening step which includes a pre-heating step, a main heating step, and a post-heating step.

FIGS. 6A, 6B, and 6C are graphs each showing change over time in the energy density of laser light in the case where laser hardening is carried out through a single heating step.

FIG. 7 is a graph, with respect to the surface of the crankshaft 10 and a portion at a depth of 1 mm from the surface, showing change over time in the temperature of the crankshaft 10 when subjected to a laser hardening step which includes a pre-heating step, a main heating step, and a post-heating step.

FIGS. 8A, 8B, and 8C are diagrams schematically showing exemplary metallographical changes in an iron-based alloy when subjected to a laser hardening step which includes a pre-heating step, a main heating step, and a post-heating step.

FIG. 9 is a graph showing an exemplary energy density profile of laser light which is used for the production of the crankshaft 10.

FIGS. 10A and 10B are diagrams showing an exemplary arrangement for achieving an energy density profile as shown in FIG. 9.

FIG. 11 is a photograph showing a cross-sectional structure of an actually-produced crankshaft 10.

FIG. 12 is a diagram showing cross-sectional structures of a crankshaft 50 which has been subjected to hardening via radio-frequency heating.

FIG. 13 is a diagram showing cross-sectional structures of a crankshaft 50 which has been subjected to hardening via radio-frequency heating.

FIG. 14 is a cross-sectional view schematically showing an exemplary engine having the crankshaft 10 according to a preferred embodiment of the present invention.

FIG. 15 is a cross-sectional view schematically showing a motorcycle having the engine shown in FIG. 14.

FIG. 16 is a diagram schematically showing a conventional generic crankshaft 50.

FIGS. 17A and 17B are enlarged cross-sectional views each showing a portion of a crankshaft 50. FIG. 17A shows a neighborhood of a pin fillet portion; and FIG. 17B shows a neighborhood of a journal fillet portion.

FIG. 18 is a diagram for explaining why an inner corner such as a pin fillet portion or a journal fillet portion is difficult to be heated.

### DETAILED DESCRIPTION OF PREFERRED EMBODIMENTS

Hereinafter, preferred embodiments of the present invention will be described with reference to the accompanying drawings. Note that the present invention is not limited to the following preferred embodiments.

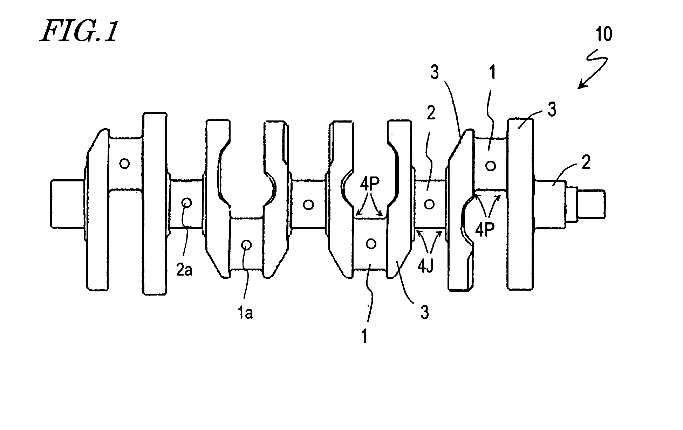

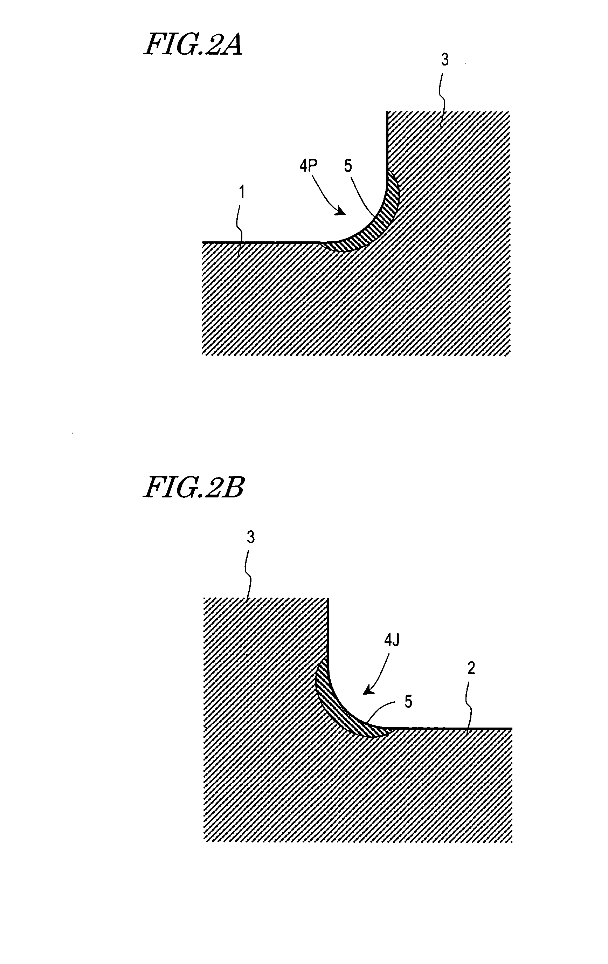

First, with reference to FIG. 1 and FIGS. 2A and 2B, the structure of the crankshaft 10 according to a preferred embodiment of the present embodiment will be described. FIG. 1 is a diagram showing the entire crankshaft 10. FIGS. 2A and 2B are enlarged cross-sectional views each showing a portion of the crankshaft 10. The crankshaft 10 is preferably formed of an iron-based alloy such as steel. As shown in FIG. 1, the crankshaft 10 includes crankpins 1, crank journals 2, and crank arms 3. The crankshaft 10 is preferably integrally formed by hot forging.

Each crankpin (hereinafter also simply referred to as a "pin") 1 serves as an axis onto which a large end of a connecting rod is attached. On the other hand, the crank journals (hereinafter also simply referred to as "journals") 2 define an axis to serve as a center of rotation of the crankshaft 10. The pins 1 and journals 2 according to the present preferred embodiment each have a diameter of no less than about 20 mm and no more than about 40 mm. Each crank arm (hereinafter also simply referred to as an "arm") 3 links a pin 1 and a journal 2. Although the present preferred embodiment illustrates a crankshaft 10 for a multi-cylinder internal combustion engine including four pins 1 and five journals 2, the number of pins 1 and journals 2 are not limited thereto. In fact, the crankshaft 10 may be a crankshaft for a single-cylinder internal combustion engine.

The pins 1 and journals 2 have oil supply holes 1a and 2a through which a lubricant is supplied to the bearings supporting the pins 1 and journals 2. Inside the crankshaft 10, oil passages (not shown) for a lubricant which is supplied from an oil pump (not shown) are formed so that adjoining oil supply holes 1a and 2a are in fluid communication. Typically, the lubricant is passed from the journal 2 side to the pin 1 side within the oil passages. The oil supply holes 1a and 2a and oil passages are preferably formed by a drilling process after the hot forging.

Between each pin 1 and each arm 3, and between each journal 2 and each arm 3, a concavely-curved fillet portion 4P or 4J is provided as shown in FIGS. 2A and 2B, respectively. Hereinafter, any fillet portion 4P located between a pin 1 and an arm 3 will be referred to as a "pin fillet portion", whereas any fillet portion 4J located between a journal 2 and an arm 3 will be referred to as a "journal fillet portion".

As shown in FIGS. 2A and 2B, in a vicinity of their surfaces, each pin fillet portion 4P and each journal fillet portion 4J contain a quench-hardened layer (i.e., a layer which has become harder through hardening; hereinafter simply referred to as a "hardened layer") 5 having a thickness of no less than about 1 mm and no more than about 2 mm. On the other hand, in a vicinity of their surfaces, the pins 1 and the journals 2 substantially do not contain any hardened layer that has a thickness exceeding about 2 mm. In other words, in the surface vicinity of the pins 1 and the journals 2, no hardened layer is substantially formed, or only a hardened layer having a thickness of about 2 mm or less is formed.

In the crankshaft 10 according to the present preferred embodiment, hardened layers with the aforementioned thickness distribution are provided. Specifically, a hardened layer 5 having a sufficient thickness is formed on each pin fillet portion 4P and each journal fillet portion 4J, whereas no hardened layer with an excessive thickness is formed on each crankpin 1 and each crank journal 2. As a result, a sufficient strength can be obtained while minimizing deformation due to hardening.

On the contrary, if the thickness of the hardened layers 5 formed on the pin fillet portions 4P and the journal fillet portion 4J is less than about 1 mm, it may become difficult to obtain a sufficient strength. Moreover, if the thickness of these hardened layers 5 exceeds about 2 mm, or any hardened layer exceeding about 2 mm is formed on the pins 1 or the journals 2, strain or cracking may occur in the crankshaft 10. From the standpoint of more surely minimizing strain and cracking, it is more preferable that the hardened layers 5 on the pin fillet portions 4P and the journal fillet portions 4J have a thickness of about 1.8 mm or less, and further preferably about 1.5 mm or less.

Note that it is not necessary that hardened layers 5 be formed on both the pin fillet portions 4P and the journal fillet portions 4J. Rather, hardened layers 5 may only be formed on at least one of the pin fillet portions 4P and the journal fillet portions 4J.

However, during operation of the internal combustion engine, stress concentrates at the pin fillet portions 4P (i.e., a greater stress acts on the pin fillet portions 4P than that on the journal fillet portions 4J). Therefore, from the standpoint of sufficiently enhancing the strength of the crankshaft 10, it is preferable that at least the pin fillet portions 4P each contain a hardened layer 5 having a thickness of no less than about 1 mm and no more than about 2 mm in a vicinity of their surface.

Moreover, from the standpoint of ensuring weight reduction of the crankshaft 10 by thinning the pins 1 and the journals 2, it is preferable that both the pin fillet portions 4P and the journal fillet portions 4J contain hardened layers 5 having a thickness of no less than about 1 mm and no more than about 2 mm in a vicinity of their surfaces.

Note that, on the condition that they do not exceed about 2 mm in thickness, hardened layers may also be formed on the pins 1, the journals 2, and the arms 3. For example, hardened layers may be formed in the vicinity of the pin fillet portions 4P between pins 1 and arms 3, and in the vicinity of journal fillet portions 4J between journals 2 and arms 3. Alternatively, hardened layers may be formed over the entire pins 1, journals 2, and arms 3. However, in order to more surely prevent strain or cracking of the crankshaft 10, it is preferable that the hardened layers on the pins 1, journals 2, and arms 3 are thinner than the hardened layers 5 on the pin fillet portions 4P and journal fillet portions 4J.

Hereinafter, a production method for the crankshaft 10 of the present preferred embodiment will be described.

First, a crankshaft 10 which has not been subjected to a hardening treatment is provided. A crankshaft 10 which is unhardened can be produced by various known techniques. The crankshaft 10 to be provided is preferably composed of a metal material having a composition which is suitable for hardening.

The hardening ability of an iron-based alloy can be evaluated based on its carbon equivalent Ceq, for example. The carbon equivalent Ceq is defined as Ceq=C+(1/10)Si+(1/5)Mn+(5/22)Cr+1.65V-(5/7)S. From the standpoint of ensuring good hardening ability, it is preferable that the carbon equivalent Ceq is about 0.5 or more. However, it must be noted that, after forming the crankshaft 10 via hot forging, the crankshaft 10 needs to be subjected to surface processing and have oil supply holes 1a and 2a, oil passages, and the like provided therein. If the carbon equivalent Ceq exceeds about 1.2, the entire crankshaft 10 after the hot forging may become so hard as to hinder its processibility, thus rendering such machining difficult. Such deteriorations in processibility become outstanding especially when the carbon equivalent Ceq is about 2 or more. For these reasons, from the standpoint of ensuring a high processibility, the carbon equivalent Ceq is preferably about 1.2 or less. Thus, in the case of employing an iron-based alloy as the material of the crankshaft 10, it is preferable that the carbon equivalent Ceq is no less than about 0.5 and no more than about 1.2.

Moreover, carbon steels are superior to stainless steels in terms of processibility and cost, and thus are excellent materials for the crankshaft 10. As the carbon steel, JIS S50C, SCM435, or SCr420 may be suitably used, for example.

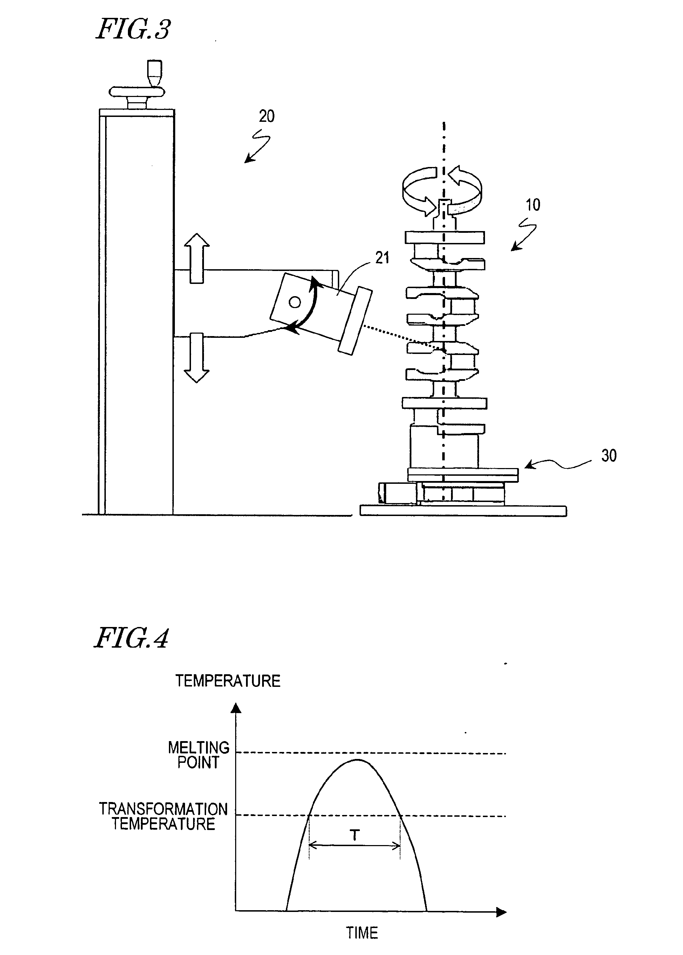

In addition to the above, a laser (laser apparatus) for use in laser hardening is provided. FIG. 3 shows a specific example of a laser. The laser 20 shown in FIG. 3 includes a laser head 21 for emitting laser light, and has a mechanism for permitting the angle and/or height of the laser head 21 to be changed. As will be specifically described later, the laser 20 is capable of emitting laser light whose energy density is substantially uniform along a direction which is substantially orthogonal to the scanning direction (e.g., across a width of about 10 mm). As such a laser 20, a high output direct diode laser (DDL) manufactured by NUVONYX, Inc. may be used, for example.

Next, the crankshaft 10 is hardened by using the laser light which is emitted from the laser 20. For example, as shown in FIG. 3, while rotating the crankshaft 10 placed on an auto-rotating table 30, the surface of the crankshaft 10 may be irradiated with the laser light from the laser 20, whereby hardening can be performed around the entire periphery of each pin fillet portion 4P and each journal fillet portion 4J. This laser hardening step preferably includes three heating steps, i.e., a pre-heating step, a main heating step, and a post-heating step.

The main heating step is a step of irradiating the surface of the crankshaft 10 with laser light such that the temperature of the surface of the crankshaft 10 is higher than the transformation temperature (or more specifically, the A3 transformation temperature) and yet lower than the melting point. Typically, the main heating step is performed such that the temperature of the surface of the crankshaft 10 is about 200°C to about 500°C higher than the A3 transformation temperature, i.e., so as to be about 1300°C to about 1400°C in the case where the' crankshaft 10 is composed of an iron-based alloy (steel) containing vanadium, for example.

The pre-heating step is performed before the main heating step. In the pre-heating step, the surface of the crankshaft 10 is irradiated with laser light whose energy density is lower than that of the laser light which is irradiated in the main heating step.

The post-heating step is performed after the main heating step. In the post-heating step, the surface of the crankshaft 10 is irradiated with laser light such that the temperature of the surface of the crankshaft 10 is maintained higher than the transformation temperature. In the post-heating step, too, laser light whose energy density is lower than that of the laser light which is irradiated in the main heating step is preferably used.

As described above, by performing the pre-heating step before the main heating step, a temperature above the transformation temperature can be quickly reached, down to a sufficient depth in the crankshaft. Moreover, by performing the post-heating step after the main heating step, the effective hardening time (i.e., a period during which a temperature that is higher than the transformation temperature is maintained) can be prolonged, without allowing the surface to melt. Therefore, according to the above-described production method, a sufficient thickness of the hardened layer can be formed in the surface vicinity of the crankshaft 10 at desired sites (e.g., on the pin fillet portions 4P and the journal fillet portions 4J). Moreover, since the above-described production method employs a laser that is capable of emitting laser light whose energy density is substantially uniform along a direction which is substantially orthogonal to the scanning direction, uniform heating can be performed down to a sufficient depth in the crankshaft.

By using the above-described production method, deep hardening can be performed and a hardened layer 5 having a sufficient thickness can be obtained even on a crankshaft 10 that has a large thermal capacity (i.e., a crankshaft whose pins 1 and/or journals 2 have a diameter of about 20 mm or more), on which a sufficient thickness of the hardened layer would not be formed via ordinary laser hardening. Moreover, without allowing cracking or strain to occur, the above-described production method makes it possible to sufficiently enhance the strength of a crankshaft 10 so that strain or cracking would occur if the hardened layers having an excessive thickness were formed on the pins 1 and journals 2 through radio-frequency hardening (i.e., a crankshaft whose pins 1 and/or journals 2 have a diameter of about 40 mm or less).

Hereinafter, the reasons why the laser hardening step which includes three heating steps attains the aforementioned effects will be described more specifically with reference to the drawings.

First, a general relationship between temperature and time of a metallographical structure which is subjected to laser hardening is conceptually illustrated in FIG. 4. As shown in FIG. 4, the temperature of a metallographical structure increases responsive to laser light irradiation, and becomes higher than the transformation temperature. Note that this heating is performed such that the temperature of the metallographical structure does not exceed the melting point. Thereafter, after laser light irradiation is finished, a temperature decrease occurs due to thermal diffusion, whereby the metallographical structure is rapidly cooled. Thus, by maintaining the metallographical structure at a temperature which is higher than the transformation temperature but which is lower than the melting point for a predetermined period of time, and thereafter cooling it, the metallographical structure is hardened. In order to achieve deep hardening and form a sufficient thickness of the hardened layer, a long period T of maintaining a temperature which is higher than the transformation temperature must be observed not only on the workpiece surface but also in the interior of the workpiece. However, since the material of the crankshaft 10 (e.g., an iron-based alloy) has a relatively high thermal conductivity, it would be difficult to maintain the temperature for such a long period T within the interior of the crankshaft with conventional laser hardening.

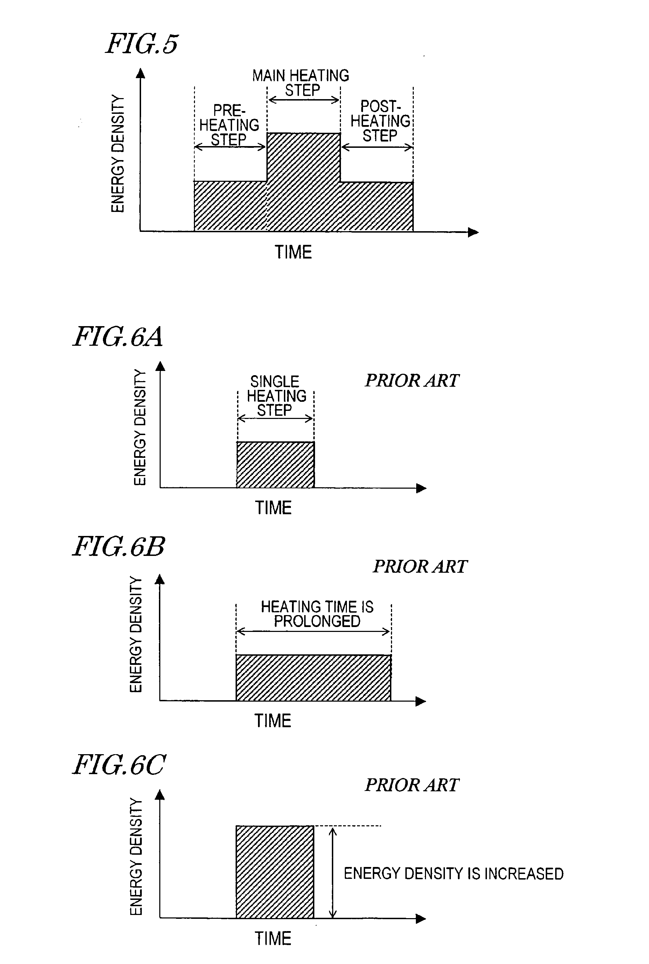

FIG. 5 shows change over time in the energy density of laser light that is irradiated onto the surface of the crankshaft 10 in the production method of the present preferred embodiment.

As shown in FIG. 5, the surface of the crankshaft 10 is first irradiated with laser light whose energy density is lower than that in the main heating step, and the heat that is generated on the surface is transmitted to the interior. Thus, a preliminary heating is performed (pre-heating step). Next, the surface of the crankshaft 10 is irradiated with laser light whose energy density is higher than that in the pre-heating step, whereby the temperature of the surface of the crankshaft 10 is made higher than the transformation temperature and yet lower than the melting point (main heating step). Thereafter, the surface of the crankshaft 10 is irradiated with laser light whose energy density is lower than that in the main heating step. As a result, not only the temperature of the surface of the crankshaft 10 is maintained higher than the transformation temperature, but also the interior is maintained at a temperature which is equal to or greater than the transformation temperature down to a sufficient depth (about 1 mm or more) during the post-heating step.

In the production method of the present preferred embodiment, a preliminary heating is performed before the main heating step, thus making it possible to quickly attain a temperature above the transformation temperature to a sufficient depth into the interior of the crankshaft 10. In other words, the period T is started earlier with respect to the interior of the crankshaft 10. Moreover, the post-heating performed after the main heating step ensures that the temperature of the interior of the crankshaft 10 is maintained higher than the transformation temperature. In other words, the period T is ended later with respect to the interior of the crankshaft 10. Therefore, according to the production method of the present preferred embodiment, the period T of maintaining a temperature which is higher than the transformation temperature can be prolonged, so that deep hardening is achieved into the interior of the crankshaft 10, and a hardened layer 5 having a sufficient thickness is provided.

On the other hand, FIG. 6A shows change over time in the energy density in the case where laser hardening is carried out through a single heating step. In this case, it will be difficult to sufficiently prolong the period T with respect to the interior of a crankshaft 10 that has a large thermal capacity (specifically, a crankshaft 10 whose pins 1 and journals 2 have a diameter of about 20 mm or more), because there is a high diffusion of heat.

Note that, even in the case of carrying out laser hardening through a single heating step, it might seem possible to achieve deep hardening by prolonging the heating time as shown in FIG. 6B, or increasing the energy density of the laser light as shown in FIG. 6C. However, if the heating time was prolonged without increasing the energy density, as shown in FIG. 6B, it would be difficult to quickly attain a temperature which is higher than the transformation temperature into the interior of the crankshaft. Thus, an excessive total heat quantity would result, thereby rendering uniform hardening difficult. On the other hand, if the energy density of the laser light was increased as shown in FIG. 6C, heat would be stored near the surface before being diffused to a sufficient depth into the interior, thus causing the surface to be melted.

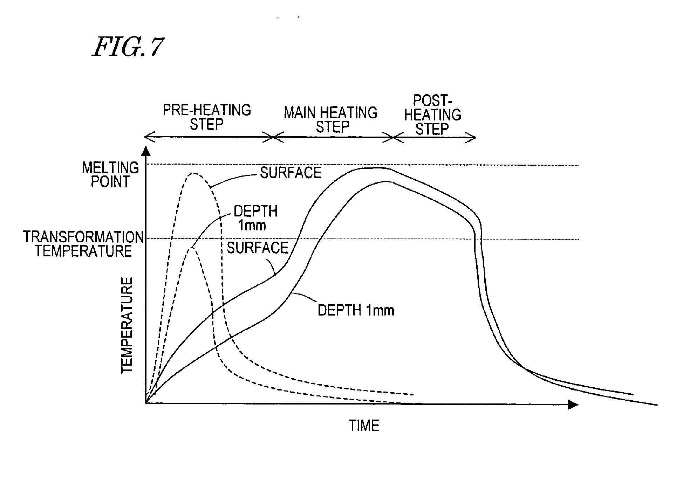

FIG. 7 is a graph, with respect to the surface of the crankshaft 10 and a portion at a depth of 1 mm from the surface, showing change over time in the temperature of the crankshaft 10 when subjected to a laser hardening as in the production method of the present preferred embodiment. For comparison, FIG. 7 also shows (broken lines) temperature change over time in the case where laser hardening is carried out through a single heating step as shown in FIG. 6A.

In the case where laser hardening is carried out through a single heating step, as shown by the broken lines in FIG. 7, the surface temperature can be made higher than the transformation temperature, but the temperature of the portion at a depth of 1 mm cannot be made higher than the transformation temperature. Therefore, a sufficient thickness of the hardened layer cannot be formed.

On the other hand, when a laser hardening which includes three heating steps is carried out according to the production method of the present preferred embodiment, as shown by solid lines in FIG. 7, the time during which a temperature which is higher than the transformation temperature but which is lower than the melting point is maintained can be prolonged for both the surface and the portion at a depth of 1 mm, whereby a hardened layer 5 having a sufficient depth can be formed.

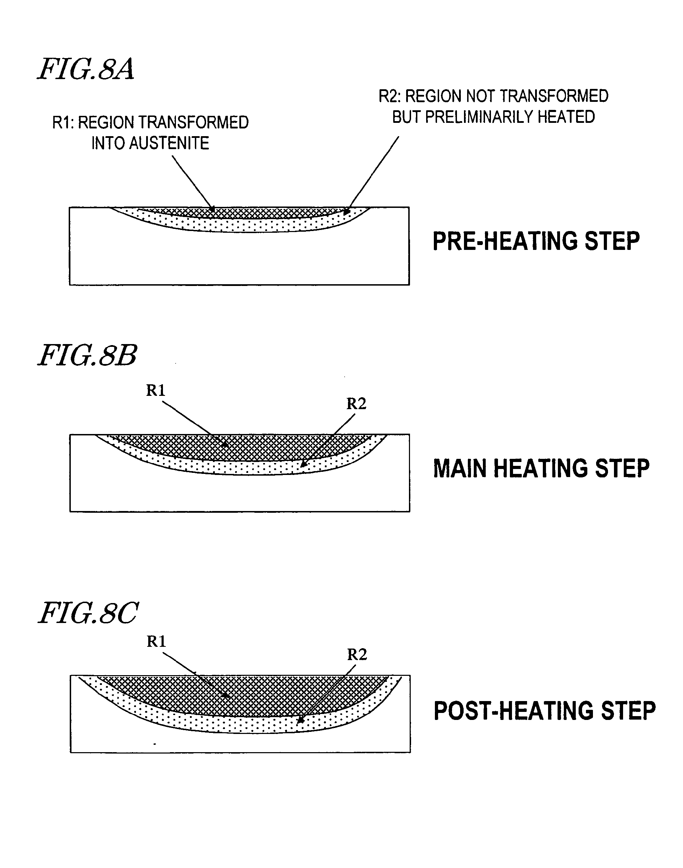

FIGS. 8A to 8C schematically show exemplary metallographical changes in an iron-based alloy when subjected to a laser hardening which includes three heating steps as described above. In FIGS. 8A to 8C, a region which has been heated to a temperature above the transformation temperature and transformed into austenite is denoted by reference numeral "R1", whereas a region which has not been transformed but is preliminarily heated is denoted by reference numeral "R2".

In the pre-heating step, as shown in FIG. 8A, only a very shallow region in the surface vicinity is transformed, but a region which extends deeper than the transformed region is preliminarily heated. In the main heating step, as shown in FIG. 8B, the preliminarily-heated region is quickly transformed, thus expanding the transformed region. At this time, an even deeper region is preliminarily heated. In the post-heating step, as shown in FIG. 8C, the region which was preliminarily heated during the main heating step is now transformed, so that the transformed region is further expanded. Thus, by performing a laser hardening which includes three heating steps, a hardened layer 5 having a sufficient thickness can be provided.

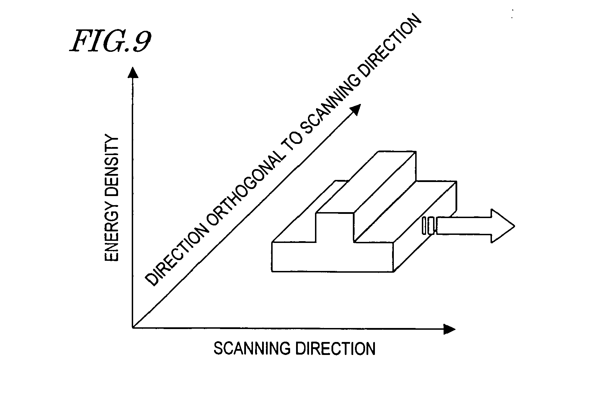

Note that, as has already been described, the energy density of the laser light used in the production method of the present preferred embodiment is substantially uniform along a direction which is substantially orthogonal to the scanning direction. An exemplary energy density profile of such laser light is shown in FIG. 9.

As shown in FIG. 9, by using laser light whose energy density is substantially uniform along a direction which is substantially orthogonal to the scanning direction, a uniform hardening can be performed along the direction which is substantially orthogonal to the scanning direction. Note that the energy density does not need to be absolutely equal along the direction which is substantially orthogonal to the scanning direction. However, from the standpoint of enhancing the uniformity of hardening, it is preferable that the variation in the energy density along the direction which is substantially orthogonal to the scanning direction is about 20% or less, and more preferably about 10% or less.

In the profile shown in FIG. 9, the energy density goes through generally stepwise changes along the scanning direction, so as to be higher at the center of the scanning direction, and lower at the front and rear of the scanning direction. By scanning the surface of the crankshaft 10 with laser light which has such a profile, it becomes possible to sequentially perform a pre-heating step, a main heating step, and a post-heating step for the crankshaft 10.

Note that, in the profile exemplified in FIG. 9, the energy density at the front of the scanning direction and the energy density at the rear of the scanning direction are essentially equal. When laser light of such a profile is used, as shown in FIG. 5, the energy density of laser light is essentially equal in both the pre-heating step and the post-heating step. However, it will be appreciated that the energy density of the laser light does not need to be equal in the pre-heating step and the post-heating step, and may differ between these two steps. In other words, the energy density at the front of the scanning direction may be different from the energy density at the rear of the scanning direction.

Moreover, in the profile exemplified in FIG. 9, the energy density goes through generally stepwise changes along the scanning direction, such that an essentially constant energy density exists at each of the front, the center, and the rear of the scanning direction. Therefore, as shown in FIG. 5, laser light of such a profile ensures that an essentially constant energy density exists at each of the pre-heating step, the main heating step, and the post-heating step. However, it will be appreciated that the energy density does not need to be constant, but may vary within each heating step.

Typically, an energy density of laser light in the pre-heating step is no less than about 40% and no more than about 60% of the energy density of laser light in the main heating step, and the energy density of laser light in the post-heating step is no less than about 40% and no more than about 60% of the energy density of laser light in the main heating step.

Typically, the pre-heating step is carried out for a time which is no less than about 100% and no more than about 150% of that of the main heating step, and the post-heating step is carried out for a time which is no less than about 100% and no more than about 150% of that of the main heating step.

As shown in FIG. 9, an energy density profile whose energy density is high at the center of the scanning direction and low at the front and rear of the scanning direction can be achieved by a constitution described below.

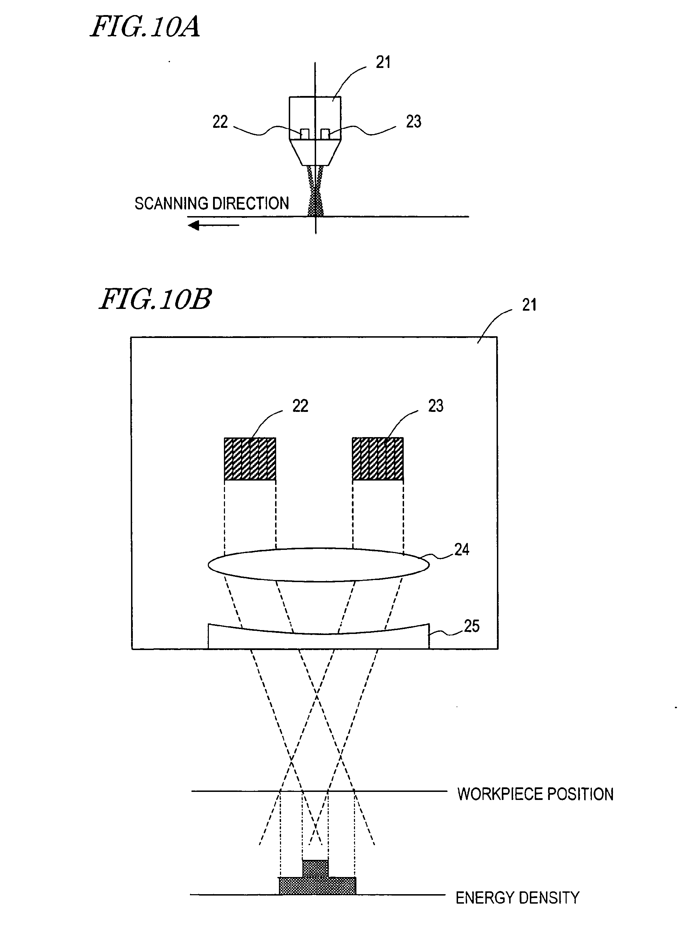

FIGS. 10A and 10B show an exemplary specific arrangement for realizing laser light having the above-described profile. The laser head 21 shown in FIGS. 10A and 10B has a first laser array (first laser light source) 22 and a second laser array (second laser light source) 23, each preferably including a plurality of laser diodes. As shown in FIG. 10A, the first laser array 22 and the second laser array 23 are disposed so that laser spots therefrom partially overlap on the surface of a workpiece. Thus, by ensuring that a laser spot of the laser light emitted from the first laser array 22 and a laser spot of the laser light emitted from the second laser array 23 partially overlap at the workpiece surface, it becomes possible to obtain laser light having an energy density profile with a high energy density at the center of the scanning direction and a low energy density at the front and rear of the scanning direction.

For example, as shown in FIG. 10B, the laser head 21 may have optics including a first lens 24 and a second lens 25, the optics being designed so that laser light from the first laser array 22 and laser light from the second laser array 23 form a single laser spot at the focal position. Then, by allowing the surface of the crankshaft 10 to be located at a "workpiece position" which is shifted from this focal position, it is ensured that a laser spot of the laser light emitted from the first laser array 22 and a laser spot of the laser light emitted from the second laser array 23 partially overlap at the surface of the crankshaft 10.

By employing the technique of using two overlapping laser spots described with reference to FIGS. 10A and 10B, it becomes possible to execute a laser hardening step which includes a pre-heating step, a main heating step, and a post-heating step in a simple manner. However, it is not necessary to employ such a technique in performing the laser hardening. The surface of the crankshaft 10 may be scanned by independent laser spots pertaining respectively to the pre-heating step, the main heating step, and the post-heating step. Alternatively, three or more laser spots may overlap.

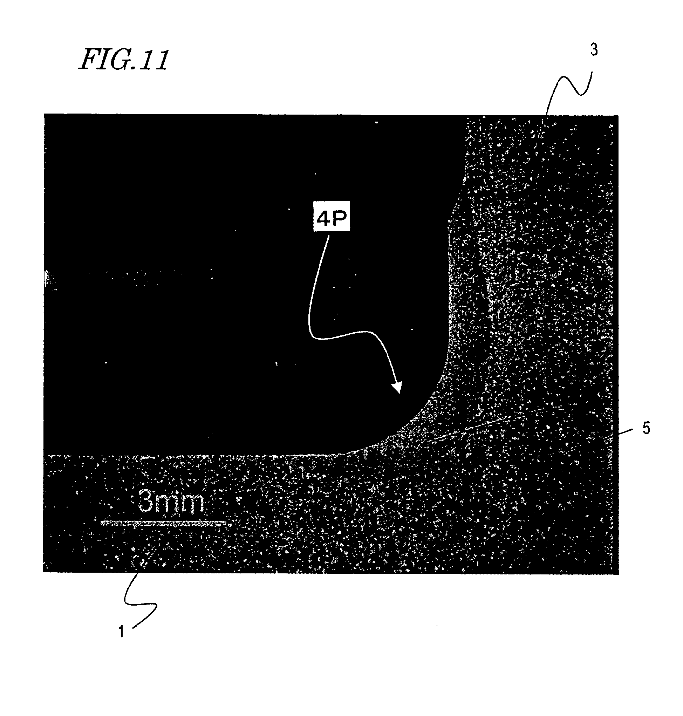

FIG. 11 shows a cross-sectional structure of a crankshaft 10 (whose pins 1 and journals 2 have diameters of 34 mm and 32 mm, respectively) which was actually produced by using the production method of the present preferred embodiment. FIG. 11 is a photograph showing a cross section of the vicinity of a pin fillet portion 4P of the crankshaft 10. As shown in FIG. 11, a hardened layer 5 having a thickness of no less than 1 mm and no more than 2 mm is formed at the pin fillet portion 4P; however, no hardened layer having a thickness exceeding 2 mm is formed on the pin 1 or the arm 3.

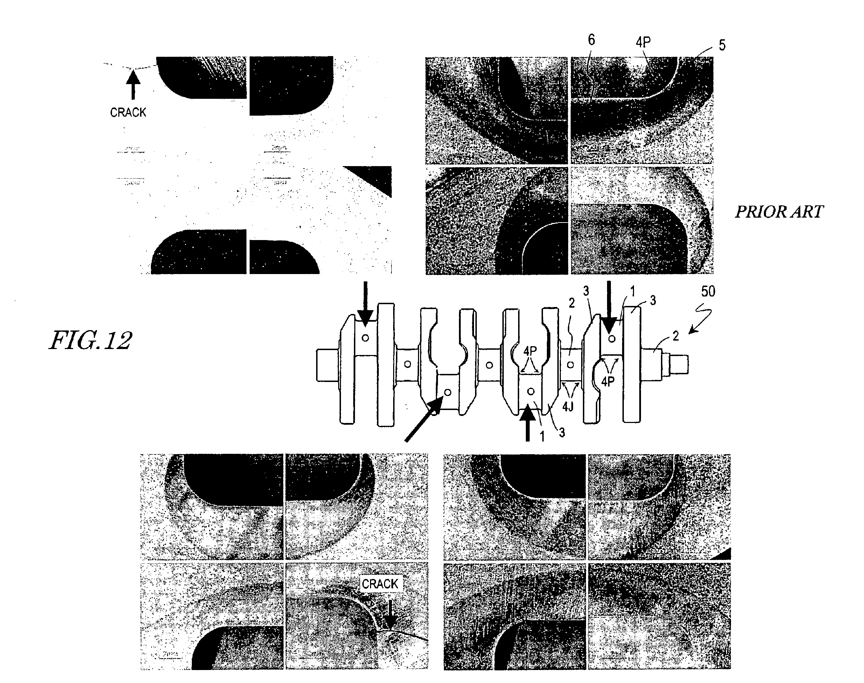

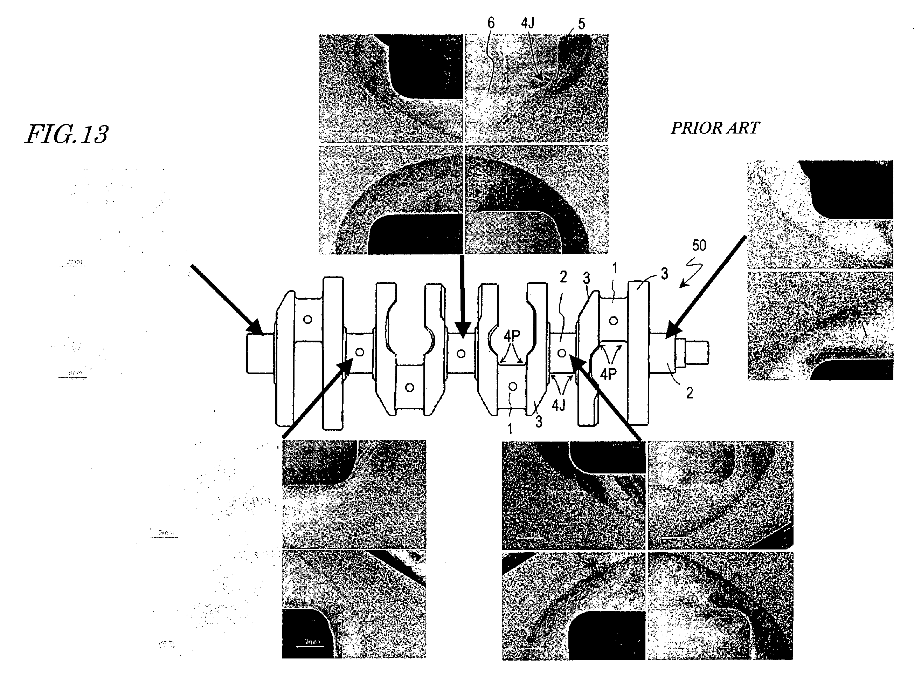

For comparison, FIG. 12 and FIG. 13 show cross-sectional structures of a crankshaft 50 which has been produced by a production method that involves a hardening step via radio-frequency heating. As shown in FIG. 12 and FIG. 13, hardening via radio-frequency heating may make it possible to form hardened layers 5 having a thickness exceeding 1 mm on the pin fillet portions 4P and the journal fillet portions 4J. In this case, however, hardened layers 6 having a thickness exceeding 2 mm are formed on the pins 1, journals 2, and arms 3. Consequently, the crankshaft 50 may be distorted, or cracked as evidenced in FIG. 12 and FIG. 13.

As has already been described, the crankshaft 10 according to the present preferred embodiment has a sufficiently high strength and yet allows for little deformation due to hardening, and therefore is broadly usable for internal combustion engines (engines) of various transportation apparatuses.

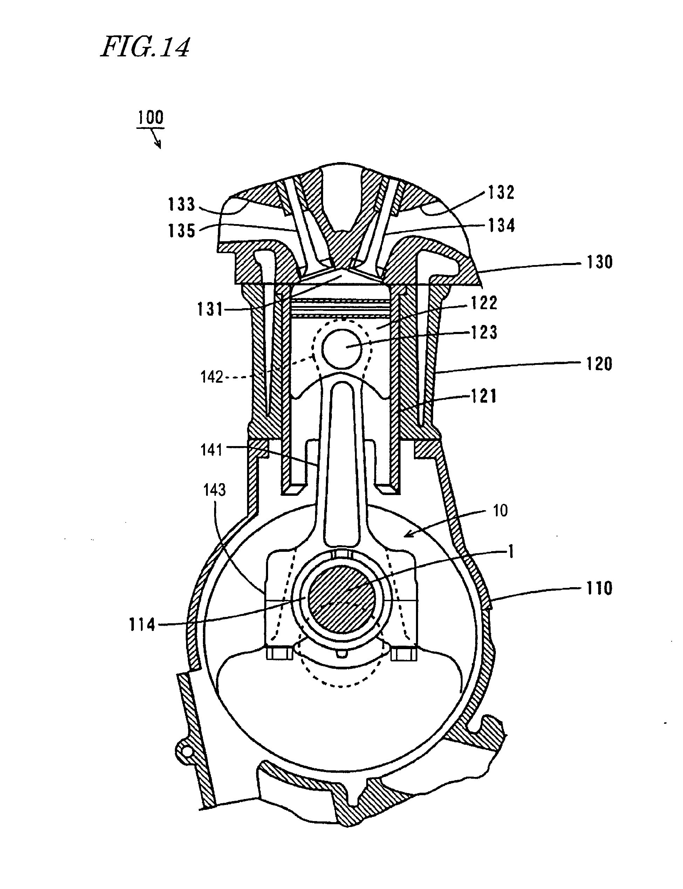

FIG. 14 shows an example of an engine 100 preferably having the crankshaft 10 according to the present preferred embodiment. The engine 100 includes a crankcase 110, a cylinder block 120, and a cylinder head 130.

The crankshaft 10 is accommodated within the crankcase 110. The cylinder block 120 is provided above the crankcase 110.

A cylinder sleeve 121 of a cylindrical shape is fitted into the cylinder block 120, and a piston 122 is provided so as to be capable of reciprocating within the cylinder sleeve 121. The cylinder head 130 is provided above the cylinder block 120.

Together with the piston 122 and the cylinder sleeve 121 in the cylinder block 120, the cylinder head 130 defines a combustion chamber 131. The cylinder head 130 includes an intake port 132 and an exhaust port 133. An intake valve 134 for supplying a fuel-air mixture into the combustion chamber 131 is provided in the intake port 132, and an exhaust valve 135 for performing evacuation of the combustion chamber 131 is provided in the exhaust port 133.

The piston 122 and the crankshaft 10 are linked via a connecting rod 141. Specifically, a piston pin 123 of the piston 122 is inserted in a throughhole (piston pin hole) in the small end 142 of the connecting rod 141, and a pin 1 of the crankshaft 10 is inserted in a throughhole (crankpin hole) in the large end 143, whereby the piston 122 and the crankshaft 10 are linked to each other. A bearing metal 114 is provided between the inner peripheral surface of the throughhole of the large end 143 and the crankpin 1.

Since the engine 100 shown in FIG. 14 includes the crankshaft 10 according to the present preferred embodiment, it is possible to achieve reduced weight, and hence high mileage and high output.

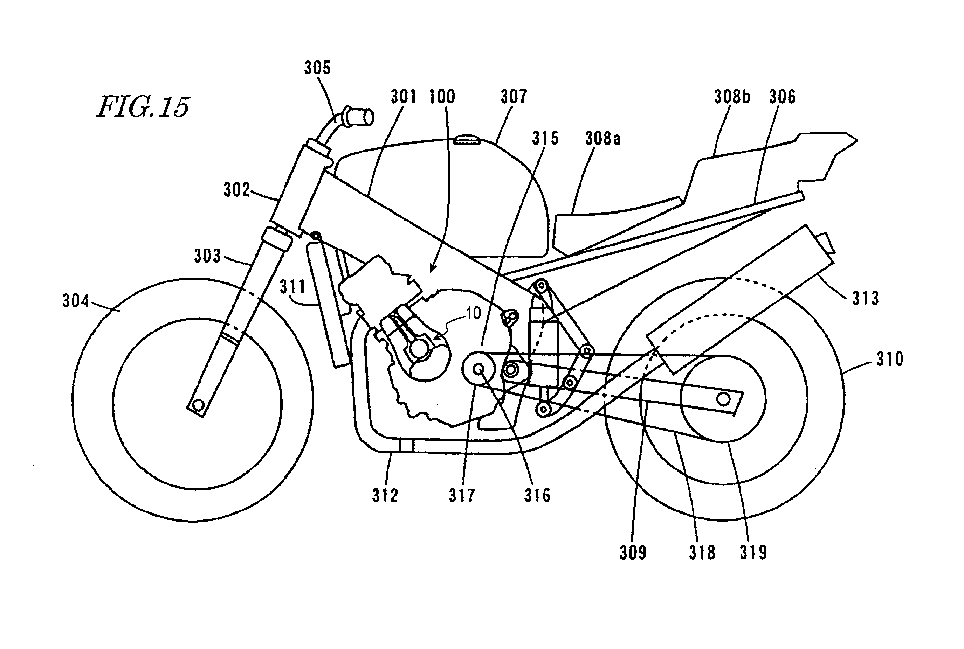

FIG. 15 shows a motorcycle which preferably incorporates the engine 100 shown in FIG. 14.

In the motorcycle shown in FIG. 15, a head pipe 302 is provided at the front end of a body frame 301, and a handle 305 is turnably supported by the head pipe 302. To the head pipe 302, a front fork 303 is attached so as to be capable of swinging in the right-left direction of the vehicle. At the lower end of the front fork 303, a front wheel 304 is supported so as to be capable of rotating.

A seat rail 306 is attached at an upper portion of the rear end of the body frame 301 so as to extend in the rear direction. A fuel tank 307 is provided on the body frame 301, and a main seat 308a and a tandem seat 308b are provided on the seat rail 306.

Rear arms 309 extending in the rear direction are attached to the rear end of the body frame 301. At the rear end of the rear arms 309, a rear wheel 310 is supported so as to be capable of rotating.

At the central portion of the body frame 301, the engine 100 shown in FIG. 14 is mounted. The crankshaft 10 of the present preferred embodiment is used in the engine 100. A radiator 311 is provided in front of the engine 100. An exhaust pipe 312 is connected to an exhaust port of the engine 100, and a muffler 313 is attached to the rear end of the exhaust pipe 312.

A transmission 315 is linked to the engine 100. Driving sprockets 317 are attached on an output axis 316 of the transmission 315. Via a chain 318, the driving sprockets 317 are linked to rear wheel sprockets 319 of the rear wheel 310. The transmission 315 and the chain 318 function as a transmitting mechanism for transmitting the motive power generated in the engine 100 to the driving wheel.

Since the motorcycle shown in FIG. 15 incorporates the engine 100, in which the crankshaft 10 of the present preferred embodiment is used, excellent performance can be obtained.

According to the preferred embodiments of the present invention, there is provided a crankshaft which has a sufficiently high strength and which allows for little deformation due to hardening, and a production method thereof. A crankshaft according to the preferred embodiments of the present invention is broadly usable for internal combustion engines of various transportation apparatuses.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. A crankshaft comprising:
a crankpin;
a crank journal;
a crank arm arranged to link the crankpin and the crank journal;
a pin fillet portion located between the crankpin and the crank arm; and
a journal fillet portion located between the crank journal and the crank arm; wherein
at least one of the crankpin and the crank journal has a diameter of no less than about 20 mm and no more than about 40 mm;
at least one of the pin fillet portion and the journal fillet portion includes a quench-hardened layer having a thickness of no less than about 1 mm and no more than about 2 mm in a vicinity of the surface thereof; and
the crankpin and the crank journal substantially do not contain any quench-hardened layer having a thickness exceeding about 2mm in a vicinity of the surface thereof.

2. The crankshaft of claim 1, wherein at least the pin fillet portion includes the quench-hardened layer having a thickness of no less than about 1 mm and no more than about 2 mm.

3. The crankshaft of claim 2, wherein both of the pin fillet portion and the journal fillet portion contain the quench-hardened layer having a thickness of no less than about 1 mm and no more than about 2 mm.

4. The crankshaft of any of claims 1 to 3, wherein the crankshaft is made of an iron-based alloy having a carbon equivalent Ceq of no less than about 0.5 and no more than about 1.2, wherein the carbon equivalent Ceq is expressed as Ceq=C+(1/10)Si+(1/5)Mn+(5/22)Cr+1.65V-(5/7)S.

5. An internal combustion engine comprising the crankshaft of any of claims 1 to 4.

6. A transportation apparatus comprising the internal combustion engine of claim 5.

7. A method for producing a crankshaft, comprising:
a step of providing a laser capable of emitting laser light having an energy density that is substantially uniform along a direction which is substantially orthogonal to the scanning direction; and
a laser hardening step of hardening a crankshaft by using laser light which is emitted from the laser; wherein
the laser hardening step includes:
a main heating step of irradiating a surface of the crankshaft with laser light so that the surface of the crankshaft has a temperature which is higher than a transformation temperature of the crankshaft and which is lower than a melting point of the crankshaft;
a pre-heating step of, before the main heating step, irradiating the surface of the crankshaft with laser light having an energy density which is lower than that of the laser light being irradiated in the main heating step; and
a post-heating step of, after the main heating step, irradiating the surface of the crankshaft with laser light having an energy density which is lower than that of the laser light being irradiated in the main heating step, so that the surface of the crankshaft is maintained at a temperature which is higher than the transformation temperature during the post-heating step.

8. The method for producing a crankshaft of claim 7, wherein, in the laser hardening step, at least one of a pin fillet portion and a journal fillet portion of the crankshaft is irradiated with laser light.

9. The method for producing a crankshaft of claim 7 or 8, wherein the laser includes a plurality of laser light sources arranged so as to produce a plurality of laser spots that partially overlap the surface of the crankshaft.
